# EUROPÄISCHE PATENTANMELDUNG

(11) **EP 0 774 503 A1**
(43) Veröffentlichungstag der Anmeldung: **21.05.1997**
(21) Anmeldenummer: 96115101.6
(22) Anmeldetag: 20.09.1996
(51) Int. Cl.: C11D 3/00, C11D 1/66, C11D 3/12, C11D 3/37, C11D 3/20, B01D 19/04

(54) **Antischaumdispersion für wässrige Tensidsysteme**

(30) Priorität: 14.11.1995 DE 19542288
(71) Anmelder: HÜLS AKTIENGESELLSCHAFT, 45764 Marl (DE)
(72) Erfinder: Balzer, Dieter, Dr., 45721 Haltern (DE)

(57) **Zusammenfassung**

Gegenstand der Erfindung sind Antischaumdispersionen für wäßrige Tensidsysteme enthaltend 5 bis 40 % Silikonöl gegebenenfalls im Gemisch mit Paraffinöl oder Paraffinwachsen, 0,3 bis 15 % hydrophobierte Kieselsäure und Wasser, dadurch gekennzeichnet, daß die Dispersion ein Dispergatorsystem aus einem tensidischen Hauptdispergatorsystem (z.B. Alkylpolyglycoside) und als Hilfsdispergator einen Alkohol mit gesättigter oder ungesättigter, verzweigter oder unverzweigter Alkylgruppe enthält.

Hauptdispergatorsystem und Hilfsdispergator(en) müssen hierbei in bestimmten Massenverhältnissen vorliegen.

Erfindungsgemäße Antischaumdispersionen zeigen sehr hohe Stabilitäten (mehrere Monate selbst bei erhöhter Temperatur) und gleichzeitig im Vergleich zu kommerziellen Entschäumern eine überlegene Wirkung.

## Beschreibung

Die Erfindung betrifft Antischaumdispersionen für wäßrige Tensidsysteme, einsetzbar als Antischaummittel insbesondere für Wasch- und Reinigungsmittel und Textilveredelungsflotten.

Die Verhinderung des Schaums bzw. seine Begrenzung - man spricht auch von Schaumsteuerung - ist bei vielen dynamischen Prozessen, die einen innigen Kontakt zwischen flüssiger und fester Oberfläche erfordern, notwendig. Die Mitbeteiligung einer Gasphase in Form von Schaum, die häufig bei wäßrigen Tensidsystemen auftritt, erschwert den Kontakt. Der Zusatz von Antischaummitteln dient daher dazu, den Kontakt zu verbessern und die Grenzflächenwirkung zu erhöhen.

Antischaumformulierungen basieren häufig auf der Kombination von Polysiloxanölen und feinteiliger hydrophobierter Kieselsäure (Ferch, H. and Leonard, W. in "Defoaming", Surfactant Science Series Vol. 45, ed. Garrett, P.R., New York, 1993). Sie sind bekannt als sehr effektive Entschäumer, deren Wirkung selbst bei relativ niedriger Dosierung weitgehend unabhängig von der Zusammensetzung der Flotte und den Bedingungen ist. Die Entschäumerwirksamkeit wird in erster Linie durch den Grad der Hydrophobierung der Festkörperoberfläche bestimmt; je hydrophober die Kieselsäure, desto höher ist die Entschäumerwirkung. Durch zugesetztes Silikonöl nimmt die Hydrophobierung weiter zu. Gleichzeitig spreitet das Öl aufgrund seiner sehr niedrigen Oberflächenspannung auf der Grenzfläche "wäßrige Tensidlösung/Luft" und dient daher der hydrophobierten Kieselsäure als Verteilungsmedium, so daß ein Transport der schaumstabilisierenden Tensidmoleküle einschließlich des assoziierten Wassers aus der Lamelle an die Festkörperoberfläche möglich wird. Der Lamellenfilm wird dabei immer dünner, schließlich kommt es zum Bruch, der Schaum zerfällt (Sawicki, G.C., JAOCS 65, 1013 (1988).

In Anbetracht dieses komplizierten Transportmechanismus, der durch die stabilisierende und häufig auch destabilisierende Wirkung des Marangoni-Effektes weiter kompliziert wird, ist es nicht überraschend, daß die Wirkung des Antischaummittels stark von der Formulierung abhängt.

Letztere ist häufig eine Emulsion (DE-OSS 42 23 768, 43 43 185) oder eine Dispersion (EP-A 573 699). Nun sind Silikonöle allein bereits als schwierig zu emulgierende Flüssigkeiten bekannt (Sawicki, loc. cit.), und feinteiliger Kieselsäure wird ein emulsionsbrechendes Potential zugeschrieben (DE-OS 42 23 768). Mithin ist die Herstellung einer lagerfähigen, gut handhabbaren (fließfähigen) Silikonentschäumerdispersion, die ja gleichzeitig eine Emulsion und eine Suspension ist, ein äußerst diffiziles Problem.

Wirkungsvolle Emulgatoren für O/W-Emulsionen von Polysiloxanölen auch im Gemisch mit Paraffinölen sind Alkylpolyglucoside (EP-A 418 479). Diese haben gegenüber den meisten anderen Tensiden außerdem den großen Vorteil hervorragender Umweltverträglichkeit. In Gegenwart von feinteiliger hydrophober Kieselsäure, wie sie wirkungsvolle Entschäumer voraussetzen, sind die betreffenden Dispersionen jedoch weniger stabil.

Die Aufgabe der vorliegenden Erfindung ist es daher, Silikonentschäumerdispersionen mit Alkylpolyglycosiden als Hauptdispergatoren bereitzustellen, deren Stabilität technischen Ansprüchen genügt.

Überraschenderweise wurde gefunden, daß sich diese Aufgabe ohne Einbuße der hohen Entschäumungswirksamkeit dadurch lösen läßt, daß Alkylpolyglycoside in speziellen Verhältnissen mit Hilfsdispergatoren kombiniert werden.

Erfindungsgemäße Hilfsdispergatoren sind Alkohole mit mittleren bis längeren, gesättigten oder ungesättigten, verzweigten oder unverzweigten Alkylketten im Bereich C₅ bis C₁₆ bzw. deren Gemische.

Gegenstand der Erfindung sind daher Antischaumdispersionen für wäßrige Tensidsysteme enthaltend 5 bis 40 % Silikonöl gegebenenfalls im Gemisch mit Paraffinöl oder Paraffinwachsen, 0,3 bis 15 % hydrophobierte Kieselsäure und Wasser, dadurch gekennzeichnet, daß die Dispersion ein Dispergatorsystem aus einem tensidischen Hauptdispergatorsystem und als Hilfsdispergator einen Alkohol mit gesättigter oder ungesättigter, verzweigter oder unverzweigter Alkylgruppe enthält.

Hauptdispergatorsystem und Hilfsdispergator(en) müssen hierbei in bestimmten Massenverhältnissen vorliegen.

Erfindungsgemäße Antischaumdispersionen zeigen sehr hohe Stabilitäten (mehrere Monate selbst bei erhöhter Temperatur) und gleichzeitig im Vergleich zu kommerziellen Entschäumern eine überlegene Wirkung, wie in den erfindungsgemäßen Beispielen gezeigt wird.

### Silikonöle

Die eingesetzten Silikonöle sind Organosiloxanpolymere der Formel I 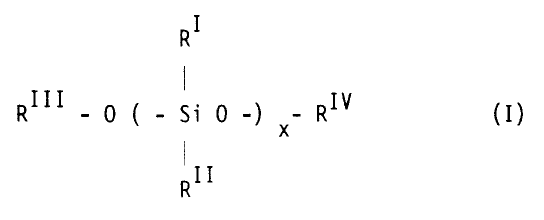 wobei R^{I} und R^{II} Alkyl- oder Arylreste sind und x zwischen 20 und 2000 liegt. Die Struktur wird durch Trialkylsilylendgruppen (R^{III} bzw. R^{IV}) vervollständigt. Bevorzugte Alkyl- bzw. Arylreste sind Methyl, Ethyl, Propyl und Isobutyl sowie Phenyl. Besonders bevorzugt sind Polydimethylsiloxane mit x-Werten zwischen 40 und 1000. Ganz besonders bevorzugt sind Polydimethylsiloxane mit x-Werten zwischen 50 und 600.

Silikonöle können mit Paraffinölen oder Paraffinwachsen bis zu einem Verhältnis 1 : 2 kombiniert werden.

### Hydrophobierte Kieselsäure

Die eingesetzte hydrophobierte Kieselsäure kann pyrogenen Ursprungs sein oder durch Fällung hergestellt werden. Ihre Hydrophobie erlangt sie z. B. durch Behandlung mit Tri- oder Dialkylsilanverbindungen. Bevorzugt werden durch Fällung hergestellte, hoch hydrophobierte Kieselsäuren mit spezifischen Oberflächen zwischen 50 und 300 m²/g.

### Hauptdispergatorsystem

Das Hauptdispergatorsystem besteht aus einem oder mehreren Hauptdispergatoren. Als Hauptdispergatoren werden Alkylpolyglycoside, insbesondere Alkylpolyglucoside, ggf. im Gemisch mit anionischen oder nichtionischen Tensiden verwendet.

Die erfindungsgemäß eingesetzten Alkylpolyglycoside genügen der Formel II

R-O-Zₙ (II),

in der R für einen linearen oder verzeigten, gesättigten oder ungesättigten aliphatischen Alkylrest mit 8 bis 16 Kohlenstoffatomen oder Gemische davon und Zₙ für einen Polyglycosylrest mit n = 1,0 bis 3 Hexose- oder Pentoseeinheiten oder Gemische davon stehen.

Bevorzugt werden Alkylpolyglycoside mit einem Polyglycosylrest mit n = 1,1 bis 2 Glycosyleinheiten, ganz besonders bevorzugt mit n = 1,1 bis 1,4 Glycosyleinheiten.

Die Alkylpolyglycoside können nach bekannten Verfahren auf Basis nachwachsender Rohstoffe hergestellt werden. Beispielsweise wird Dextrose in Gegenwart eines sauren Katalysators mit n-Butanol zu Butyl(poly)glucosidgemischen umgesetzt, welche mit langkettigen Alkoholen ebenfalls in Gegenwart eines sauren Katalysators zu den gewünschten Alkylpolyglucosidgemischen umglycosidiert werden. Oder Dextrose wird unmittelbar mit dem gewünschten langkettigen Alkohol umgesetzt.

Die Struktur der Produkte ist in bestimmten Grenzen variierbar. Der Alkylrest R wird durch die Auswahl des langkettigen Alkohols festgelegt. Günstig aus wirtschaftlichen Gründen sind die großtechnisch zugänglichen Tensidalkohole mit 8 bis 16 C-Atomen, insbesondere native Fettalkohole aus der Hydrierung von Fettsäuren bzw. Fettsäurederivaten. Verwendbar sind auch Ziegleralkohole oder Oxoalkohole.

Der Polyglycosylrest Zₙ wird einerseits durch die Auswahl des Kohlenhydrats und andererseits durch die Einstellung des mittleren Polymerisationsgrads n z. B. nach DE-OS 19 43 689 festgelegt. Im Prinzip können Polysaccharide wie z. B. Stärke oder Maltodextrine und Dextrose, etc. eingesetzt werden. Bevorzugt wird die großtechnisch leicht zugängliche Dextrose verwendet. Da die wirtschaftlich interessanten Alkylpolyglycosidsynthesen nicht regio- und stereoselektiv verlaufen, sind Alkylpolyglycoside stets Gemische von Oligomeren, die ihrerseits Gemische verschiedener isomerer Formen darstellen. n ist ein Mittelwert, der daher auch nicht ganzzahlig sein kann. Die Alkylpolyglycoside liegen nebeneinander mit α- und β-glycosidischen Bindungen in Pyranose- und Furanoseform vor. Auch die Verknüpfungsstellen zwischen zwei Saccharidresten sind unterschiedlich.

Erfindungsgemäß eingesetzte Alkylpolyglycoside lassen sich auch durch Abmischungen von Alkylpolyglycosiden mit Alkylmonoglycosiden herstellen. Letztere kann man z. B. nach EP-A 0 092 355 mittels polarer Lösemittel, wie Aceton, aus Alkylpolyglycosiden gewinnen bzw. anreichern.

Der Glycosidierungsgrad kann zweckmäßigerweise mittels Hochtemperaturgaschromatographie der silylierten Alkylpolyglycoside bestimmt werden.

Ökologisch zählen die Alkylpolyglycoside zu den umweltfreundlichsten Tensiden. So wurden bei Prüfung der biologischen Abbaubarkeit (Coupled Unit Test, DOC-Messung) Werte von 95 bis 97 % erreicht.

Die Toxizitätsdaten mit LD 50 (Ratte > 10 000 mg/kg), LC 50 (Goldorfe 12 - 40 mg/l) und EC 50 (Daphnia 30 - 110 mg/l) bei je 2 C₁₀C₁₂- bzw. C₁₂C₁₄-Alkylpolyglycosiden deuten ebenfalls ein im Vergleich mit vielen anderen Tensiden, auch üblichen Silikonentschäumerdispergatoren, hervorragendes Umweltverhalten an. Folglich ist ihr Einsatz bei dieser Anwendung von großem Vorteil.

In manchen Fällen kann es zweckmäßig sein, das Alkylpolyglycosid mit bis zu 40 %, vorzugsweise bis zu 20 % Hilfstensid, zu kombinieren. Als Hilfstenside sind anionische Tenside wie C₈-C₁₈-Fettalkoholsulfate, C₈-C₁₈-Fettalkoholethersulfate mit 1 bis 3 Mol Ethylenoxid/mol sowie nichtionische Tenside, wie C₈-C₁₄-Fettsäure-N-Alkylglucamide oder deren Gemische geeignet.

### Hilfsdispergatoren

Die erfindungsgemäßen Hilfsdispergatoren sind mittlere bis längere, gesättigte oder ungesättigte, verzweigte oder unverzweigte primäre, sekundäre oder tertiäre Alkohole mit 5 bis 16 Kohlenstoffatomen und deren Gemische. Sie werden meist in relativ geringen Mengen dem Hauptdispergatorsystem zugesetzt und erhöhen unerwartet stark die Stabilität der Antischaumdispersion, die gleichzeitig Emulsion und Suspension ist. Geeignete Massenverhältnisse von Hilfsdispergator und Hauptdispergatorsystem liegen zwischen 1 : 20 und 1 : 1.

Bevorzugt werden Verhältnisse zwischen 1 : 10 und 1 : 2. Höhere Gehalte an Hilfsdispergatoren führen gewöhnlich zu Stabilitätseinbußen.

Die Verwendung von Alkylpolyglycosiden auch in Kombination mit anderen Stoffen als Emulgatoren ist bereits seit einiger Zeit bekannt. Als Additive werden hierbei auch Alkohole eingesetzt, wie in EP 0 418 479, WO 92 06778, DE 40 33 928 und EP 0 622 397 beschrieben, allerdings handelt es sich hierbei um Emulsionen und nicht um spezielle Dispersionen, wie sie die erfindungsgemäßen Antischaummittel darstellen.

### Antischaumdispersion

Die Antischaumdispersionen bestehen aus 5 bis 40 % Silikonöl, 0,3 bis 15 % hydrophobierter Kieselsäure, 2 bis 30 % Hauptdispergatorsystem, 0,1 bis 15 % Hilfsdispergatoren und Wasser. Bevorzugt werden 10 bis 30 % Silikonöl, 0,8 bis 5 % hydrophobierte Kieselsäure, 3 bis 15 % Hauptdispergatorsystem, 0,2 bis 7,5 % Hilfsdispergatoren sowie Wasser.

Besonders bevorzugt sind 15 bis 25 % Silikonöl, 1 bis 3 % hydrophobierte Kieselsäure, 7 bis 12 % Hauptdispergatorsystem und 0,3 bis 3 % Hilfsdispergatoren sowie Wasser.

Bevorzugt sind hydrophobierte Fällungskieselsäure und Polydimethylsiloxan mit x zwischen 40 und 1000 als Silikonöl, Alkylpolyglucosid mit Glucosidierungsgraden zwischen 1,1 und 2,0 in Kombination mit 0 bis 40 % Hilfstensid (bezogen auf Gesamttensid) als Hauptdispergatorsystem und C₆- bis C₁₄-Alkohole, besonders bevorzugt C₇- bis C₁₂-Alkohole und ganz besonders bevorzugt C₉ bis C₁₁-Alkohole als Hilfsdispergatoren. Besonders bevorzugt sind Alkohole mit gesättigten, linearen Alkylgruppen.

Die Antischaumdispersionen lassen sich durch einfaches Zusammenrühren der Bestandteile unter Anwendung geringer Scherkräfte herstellen. Eine bevorzugte Herstellungsart besteht darin, die Dispergatoren in dem Silikonöl zu verteilen und sodann mit der hydrophobierten Kieselsäure zu verrühren. Anschließend wird mit dem Wasser vereinigt.

Die erfindungsgemäßen Beispiele (Tabelle 1) sollen das Verfahren erläutern. Es wurden sowohl die Dispersionsstabilität als auch die Entschäumerwirkung im Vergleich zu einem kommerziellen Silikonentschäumer getestet. Die Lagerstabilität (z. T. bei erhöhter Temperatur) wurde visuell beurteilt. Zur Messung des Schaumvermögens wurde nach einer manuellen Schlagmethode eine Testlösung (250 ml 0,1 %ige Tensidlösung oder 0,5 %ige Waschmittellösung) in einem hohen zylindrischen Gefäß (Durchmesser 5,5 cm, 1250 ml Inhalt), mit einer Lochplatte von 4,5 cm Durchmesser, 20 Löcher mit 0,5 cm Durchmesser) 10 mal geschlagen und sofort die Schaumhöhe notiert. Die Reproduzierbarkeit der Messung lag zwischen 5 und 10 %. Zur Entschäumerprüfung wurden jeweils 0,025 g/l Entschäumer der Tensidlösung hinzugefügt.

Die erfindungsgemäßen Beispiele (Tab.) demonstrieren die hohe Entschäumerwirksamkeit bei gleichzeitig im Vergleich zum Stand der Technik (Beispiel 2) ausgezeichneter Dispersionsstabilität. Der Effekt der Hilfsdispergatoren zeigt sich deutlich im Vergleich zu Beispiel 12. Zusätze höherer Mengen an Hilfsdispergatoren (Beispiel 5) führen zu mangelnder Stabilität und sind daher ungünstig. Gleiches gilt für niedere Alkohole wie n-Butanol.

Die Bezeichnung in der Tabelle bedeuten:
(1) Polydimethylsiloxane der Firma Wacker
(2) C₁₀C₁₃-Paraffinöl
(3) hydrophobierte Fällungskieselsäure der Fa. Degussa
(4) C₁₂C₁₄ APG_{1,2}
(5) C₈C₁₀ APG der Fa. Henkel
(6) stabil: völlig homogen, leicht bewegliche Flüssigkeit
   (stabil): schwache Inhomogenitäten
   -- : starke Inhomogenitäten

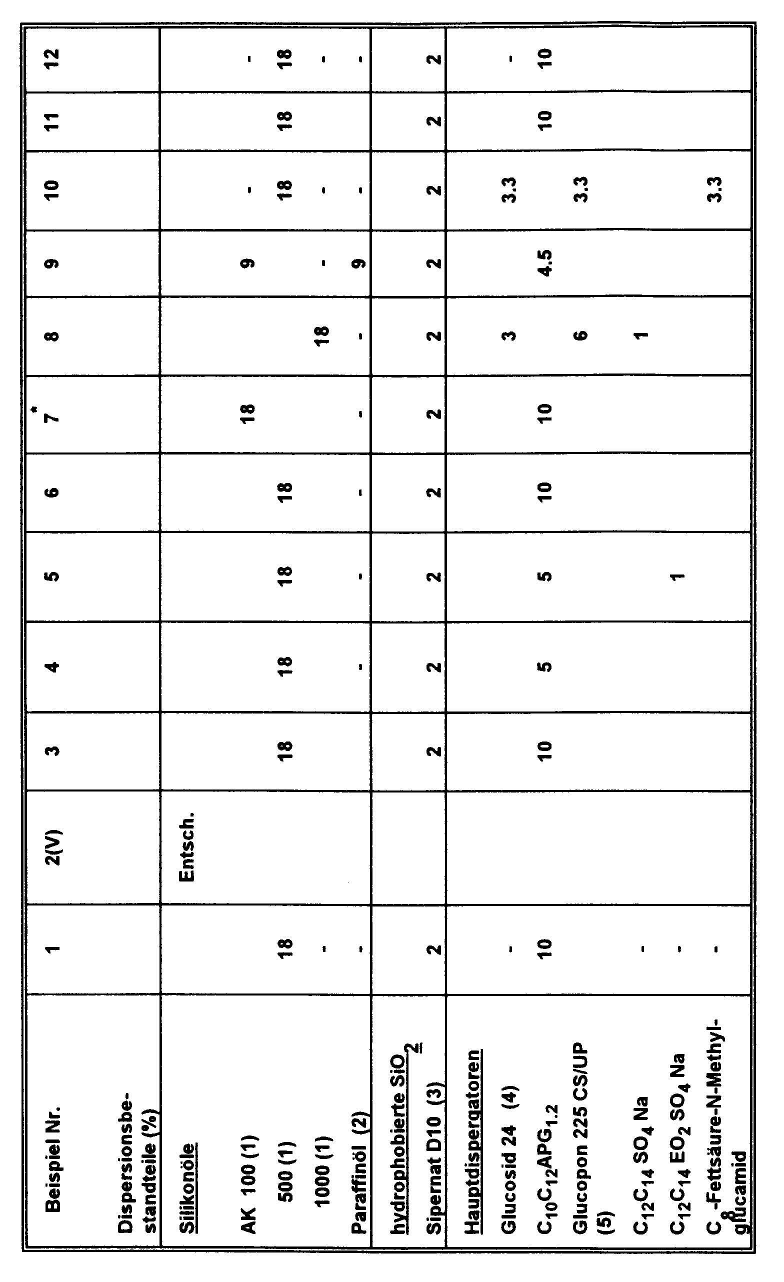

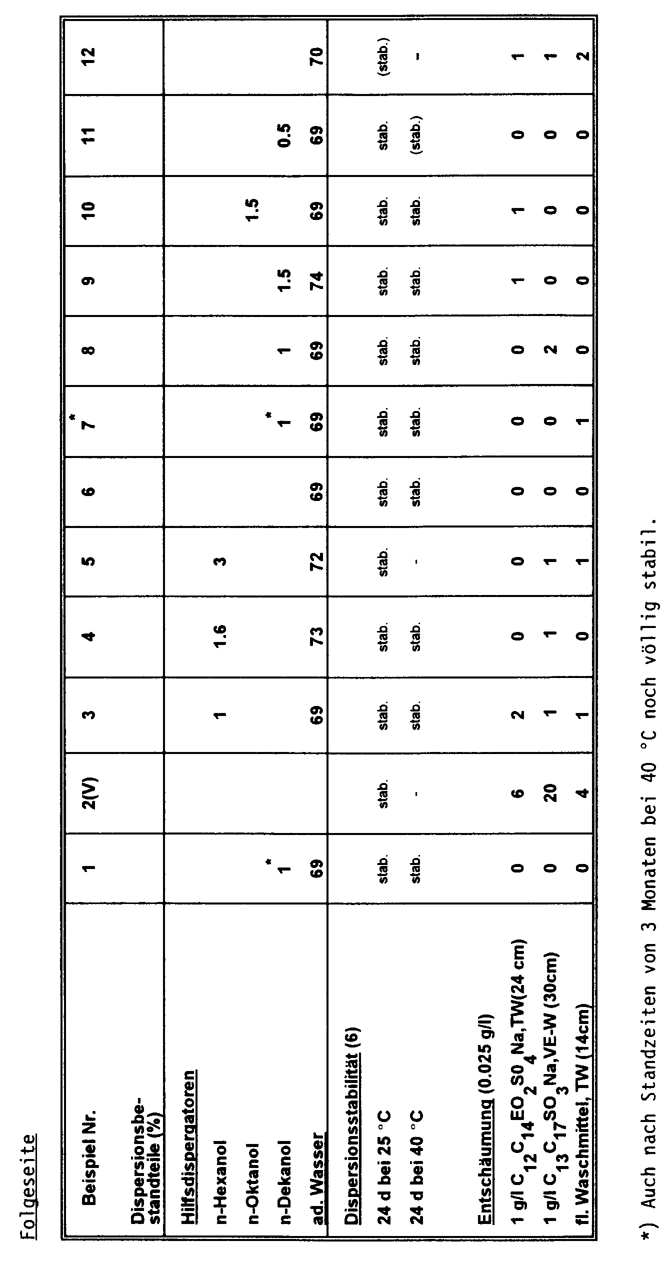

## Patentansprüche

1. Antischaumdispersion für wäßrige Tensidsysteme, enthaltend 5 bis 40 % Silikonöl der Formel I 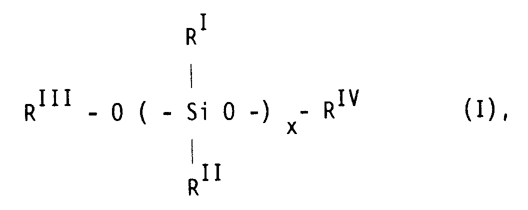 worin R^{I} und R^{II} Alkyl- oder Arylreste, R^{III} und R^{IV} Trialkylsilylgruppen und x 20 bis 2 000 bedeuten,
0.3 bis 15 % hydrophobierte Kieselsäure
und Wasser,
dadurch gekennzeichnet,
daß die Dispersion ein Dispergatorsystem aus einem tensidischen Hauptdispergatorsystem und als Hilfsdispergator einen Alkohol mit gesättigter oder ungesättigter, verzweigter oder unverzweigter Alkylgruppe enthält.

2. Antischaumdispersion nach Anspruch 1,
dadurch gekennzeichnet,
daß das Silikonöl 0 bis 67 % Paraffinöl oder Paraffinwachs enthält.

3. Antischaumdispersion nach den Ansprüchen 1 oder 2,
dadurch gekennzeichnet,
daß der Hauptdispergator des Hauptdispergatorsystems Alkylpolyglycosid der Formel II,
R-O-Zₙ (II)
ist, worin R einen linearen oder verzweigten, gesättigten oder ungesättigten Alkylrest mit 8 bis 16 C-Atomen und Zₙ einen Oligoglycosidrest, bei dem n im Mittel 1,0 bis 3 ist, bedeuten.

4. Antischaumdispersion nach den Ansprüchen 1 oder 2,
dadurch gekennzeichnet,
daß das Hauptdispergatorsystem zu mindestens 60 % (bez. auf das Dispergatorsystem) aus Alkylpolyglycosid der Formel II
R-O-Zₙ (II)
besteht, worin R einen lineraren oder verzweigten, gesättigten oder ungesättigten Alkylrest mit 8 bis 16 C-Atomen und Zₙ einen Oligoglycosidrest, bei dem n im Mittel 1,0 bis 3 ist, bedeuten.

5. Antischaumdispersion nach Anspruch 3 oder 4,
dadurch gekennzeichnet,
daß n im Mittel einen Wert von 1,1 bis 2 bedeutet.

6. Antischaumdispersion nach einem der vorhergehenden Ansprüche,
dadurch gekennzeichnet,
daß das Hauptdispergatorsystem zu 0 bis 40 % aus anionischem und/oder nichtionischem Tensid besteht.

7. Antischaumdispersion nach einem der vorhergehenden Ansprüche,
dadurch gekennzeichnet,
daß das Hauptdispergatorsystem zu 0 bis 20 % aus anionischem und/oder nichtionischem Tensid besteht.

8. Antischaumdispersion nach einem der Ansprüche 6 oder 7,
dadurch gekennzeichnet,
daß das anionische Tensid ein C₈-C₁₈-Fettalkoholsulfat und/oder C₈-C₁₈-Fettalkoholethersulfat mit 1 bis 3 mol Ethylenoxid pro mol ist.

9. Antischaumdispersion nach einem der Ansprüche 6 oder 7,
dadurch gekennzeichnet,
daß das nichtionische Tensid C₈-C₁₄-Fettsäure-N-alkylglucamid ist.

10. Antischaumdispersion nach einem der Ansprüche 1 bis 9,
dadurch gekennzeichnet,
daß die Konzentration des Hauptdispergatorsystems 2 bis30 Gew.-% beträgt.

11. Antischaumdispersion nach einem der Ansprüche 1 bis 9,
dadurch gekennzeichnet,
daß die Konzentration des Hauptdispergatorsystems 3 bis 15 Gew.-% beträgt.

12. Antischaumdispersion nach einem der Ansprüche 1 bis 11,
dadurch gekennzeichnet,
daß als Hilfsdispergatoren Alkohole mit 5 bis 16 C-Atomen verwendet werden.

13. Antischaumdispersion nach einem der Ansprüche 1 bis 11,
dadurch gekennzeichnet,
daß als Hilfsdispergatoren Alkohole mit 6 bis 14 C-Atomen verwendet werden.

14. Antischaumdispersion nach den Ansprüchen 1 bis 11,
dadurch gekennzeichnet,
daß als Hilfsdispergatoren Alkohole mit 7 bis 12 C-Atomen verwendet werden.

15. Antischaumdispersion nach den Ansprüchen 1 bis 11,
dadurch gekennzeichnet,
daß als Hilfsdispergatoren Alkohole mit 9 bis 11 C-Atomen verwendet werden.

16. Antischaumdispersion nach einem der Ansprüche 1 bis 13,
dadurch gekennzeichnet,
daß die Konzentration der Hilfsdispergatoren 0.1 bis 15 % beträgt.

17. Antischaumdispersion nach einem der Ansprüche 1 bis 15,
dadurch gekennzeichnet,
daß die Konzentration der Hilfsdispergatoren 0.2 bis 7.5 % beträgt.

18. Antischaumdispersion nach einem der Ansprüche 1 bis 17,
dadurch gekennzeichnet,
daß das Massenverhältnis von Hilfsdispergator(en) und Hauptdispergatorsystem(en) zwischen 1 : 20 und 1 : 1 liegt.

19. Antischaumdispersion nach einem der Ansprüche 1 bis 17,
dadurch gekennzeichnet, daß das Massenverhältnis von Hilfsdispergator(en) zu Hauptdispergatorsystem(en) zwischen 1 : 10 und 1 : 2 liegt.

20. Antischaumdispersion nach einem der Ansprüche 1 bis 19,
dadurch gekennzeichnet,
daß das Silikonöl Polydimethylsiloxan mit x-Werten zwischen 40 und 1 000 ist.

21. Verwendung der Antischaumdispersion nach den Ansprüchen 1 bis 20 als Antischaummittel für Wasch- und Reinigungsmittel und/oder Textilveredelungsflotten.
